# EUROPÄISCHE PATENTSCHRIFT

(11) **EP 1 707 915 B1**
(45) Veröffentlichungstag und Bekanntmachung des Hinweises auf die Patenterteilung: **03.09.2008**
(21) Anmeldenummer: 06005696.7
(22) Anmeldetag: 21.03.2006
(51) Int. Cl.: G01B 5/00, B25B 11/00

(54) **Verfahren zum Vermessen eines in einer Referenzlage gehalterten Werkstücks**
Method for measuring a workpiece held in a reference position
Procédé pour mesurer une pièce supportée dans une position de référence

(30) Priorität: 01.04.2005 DE 102005015322
(43) Veröffentlichungstag der Anmeldung: 04.10.2006
(73) Patentinhaber: Junker & Partner GmbH, 66636 Tholey (DE)
(72) Erfinder: Huber, Alfred, 66571 Eppelbom (DE); Junker, Franz-Rudlof, 66636 Sotzweiler (DE)
(74) Vertreter: Bernhardt, Reinold

(56) Entgegenhaltungen:
- US-A- 4 684 113
- US-A- 5 829 151
- US-B1- 6 298 572
- PATENT ABSTRACTS OF JAPAN Bd. 014, Nr. 389 (P-1095), 22. August 1990 (1990-08-22) & JP 02 147810 A (NISSAN MOTOR CO LTD), 6. Juni 1990 (1990-06-06)
- PATENT ABSTRACTS OF JAPAN Bd. 012, Nr. 112 (P-687), 9. April 1988 (1988-04-09) -& JP 62 242812 A (DAIHATSU MOTOR CO LTD), 23. Oktober 1987 (1987-10-23)

## Beschreibung

Die Erfindung betrifft eine neue Verwendung einer Vorrichtung, die mehrere Halteelemente umfasst, welche in verschiedenen räumlichen Positionen jeweils einen Haltepunkt für ein Werkstückinsbesondere ein Bauteil einer Fahrzeugkarosserie, bilden wobei die Position des Haltepunktes wenigstens eines der Halteelemente durch einen Motor verstellbar ist.

Aus der US 5,829,151 geht eine solche Vorrichtung hervor, bei der das Werkstück zur Vermessung auf Halteelemente gesetzt wird, die mit Hilfe von computergesteuerten Schrittmotoren höhenverstellbar sind.

Die Patentschrift US 6,298,572 B1 beschreibt eine Vorrichtung, bei der ein Werkstück zur Vermessung mit einer Koordinaterlmessmaschine in einer Referenzlage durch mehrere Halteelemente abgestützt wird. Zur Befestigung wird das Werkstück an ausgewählten Stellen während der Messung mit Hilfe einer gesonderten, das Werkstück am Rand umgreifenden Spanneinrichtung gehalten.

Gemäß der Erfindung wird die eingangs beschriebene Vorrichtung zusammen mit einer solchen, das Werkstück gegen den Haltepunkt drückenden Spanneinrichtung verwendet, um das Werkstück durch motorische Verstellung des Haltepunktes elastisch zu verformen und das elastisch verformte Werkstück in einer Referenzlage zu halten.

Vorteilhaft kann die Vermessung des elastisch verformten Werkstücks darüber Aufschluss geben, wie sich Abweichungen des Werkstücks von den vorgegebenen Maßen auswirken und ob diese Abweichungen ggf. toleriert werden können.

Für die Spanneinrichtung kann ein mit einem Dorn verbundener, den Werkstückrand übergreifenden Bügel mit einem gegen das Werkstück pressbaren Schenkel verwendet werden.

Vorzugsweise ist eine das Ausmaß der Verstellung erfassende Messeinrichtung vorgesehen, so dass nach einer Veränderung die neue Haltepunktposition bekannt ist. Insbesondere kann das Ausmaß der Verstellung vorwählbar sein, wobei über die Messeinrichtung z. B. eine Einregelung auf den vorgewählten Wert erfolgt.

Bei dem Stellmotor handelt es sich vorzugsweise um einen Schrittmotor, so dass das Ausmaß der Verstellung über die Anzahl erfolgter Schritte gemessen werden kann.

Zweckmäßig ermittelt ein Computer geänderte Haltepunktpositionen anhand der Schrittzahl und speichert die Haltepunktpositionen. Der Computer kann den Schrittmotor steuern und Schrittzahlen vorgeben, ggf. entsprechend einem vorgegebenen Zielwert der Haltepunktposition.

In einer bevorzugten Ausführungsform der Erfindung wird ein Halteelement mit einem den Haltepunkt bildenden Kopf mit einer Kugelfläche verwendet. Ein solcher Haltekopf liegt unabhängig von seiner Lage stets punktweise gegen das Werkstück an,

In einer weiteren Ausführungsform der Erfindung weist der Motor eine auf einer Spindel sitzende Hohlwelle zur translatorischen Verschiebung der Spindel in Richtung der Spindelachse auf. Der die Kugelfläche aufweisende Kopf ist an einem durch den Motor in einer Führung verschiebbaren Dorn gebildet, wobei der Dorn an die Spindel gekoppelt ist.

Die Erfindung wird nachfolgend anhand eines Ausführungsbeispiels und der beiliegenden, sich auf dieses Ausführungsbeispiel beziehenden Zeichnungen näher erläutert. Es zeigen:
- Fig.1: eine Vorrichtung mit Stellmotore aufweisenden Halteelementen,
- Fig. 2: ein in der Vorrichtung von Fig. 1 verwendetes Halteelement in einer Seitenansicht,
- Fig. 3: das Halteelement von Fig. 2 in einer um 90° gedrehten, teilweise geschnittenen Seitenansicht,
- Fig. 4: eine Draufsicht auf das Halteelement von Fig. 2,
- Fig. 5: eine Schnittansicht des Halteelements von Fig. 2 gemäß Schnittlinie A-D,
- Fig. 6: eine weitere Schnittansicht des Halteelements von Fig. 2 gemäß Schnittlinie E-F, und
- Fig. 7: eine Detailansicht des Halteelements von Fig. 2.

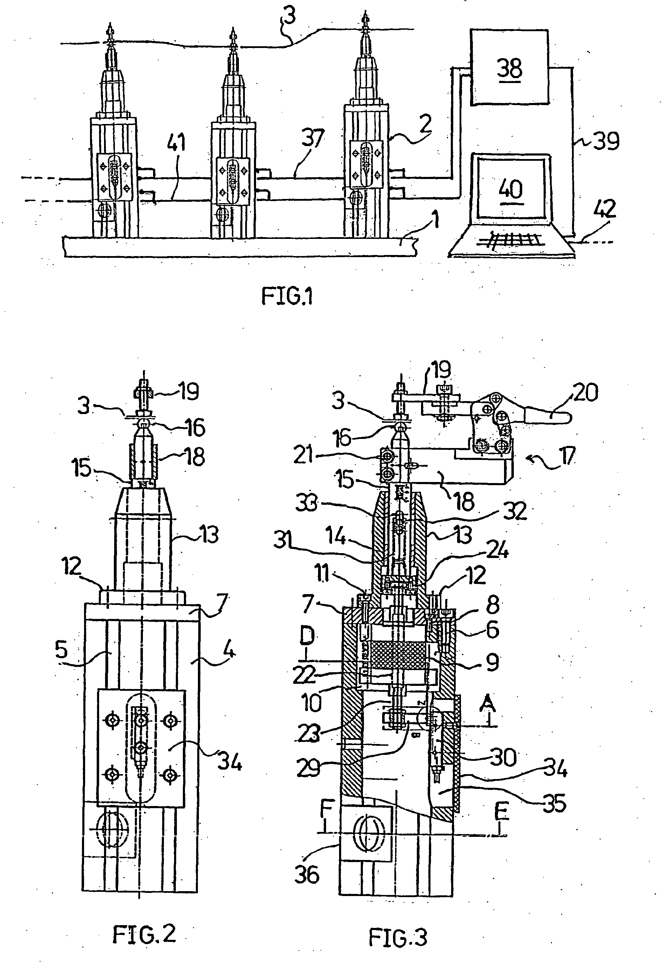

Von einer in Fig. 1 gezeigten Basisplatte 1 erstrecken sich in vertikaler Richtung Halteelemente 2 zur Halterung eines zu vermessenden Karosseriebauteils 3 in einer Referenzlage. Das durch die Vorrichtung von Fig. 1 gehaltene Karosseriebauteil 3 lässt sich mit Hilfe einer Koordinatenmessmaschine vermessen.

Die Halteelemente 2 weisen jeweils ein Hohlprofil 4 mit einem im Umriss quadratischen Querschnitt auf. Am Hohlprofil außen sind hinterschnittene Nuten 5 gebildet, die sich in vielfältiger Weise zu Befestigungszwecken nutzen lassen.

An seinem oberen Ende ist das Hohlprofil 4 über vier Schrauben 6 mit einer Deckelplatte 7 verbunden. Die Deckelplatte 7 trägt einen daran durch Schrauben 8 befestigten Schrittmotor 9, welcher in eine Einsenkung 10 im Hohlprofil 4 hineinragt.

Auf ihrer dem Schrittmotor 9 abgewandten Seite ist die Deckelplatte 7 über Schrauben 11 mit einem Flansch 12 einer Führungshülse 13 verbunden. In die Führungshülse 13 sind im Abstand zueinander zwei Gleitbuchsen 14 eingesetzt, in welchen ein Dorn 15 vertikal verschiebbar ist.

Ein Kugelkopf 16 am oberen Ende des Doms 15 bildet einen Haltepunkt für das Karosseriebauteil 3, welches durch eine bügelförmige, den Rand des Karosseriebauteils 3 übergreifende Spanneinrichtung 17 gegen den Haltepunkt gedrückt wird. Ein Bügelschenkel 18 der Spanneinrichtung 17 ist mit dem Dorn 15 durch Verklemmung mittels Schrauben 21 verbunden. Ein gegen den Bügelschenkel 18 beweglicher Bügelschenkel 19 lässt sich mit Hilfe eines Spannhebels 20 gegen das Karosseriebauteil 3 auf dessen dem Haltepunkt gegenüberliegende Seite drücken.

Der Schrittmotor 9 weist eine Hohlwelle 22 auf, welche auf einer durch den Schrittmotor translatorisch bewegbaren Spindel 23 sitzt.

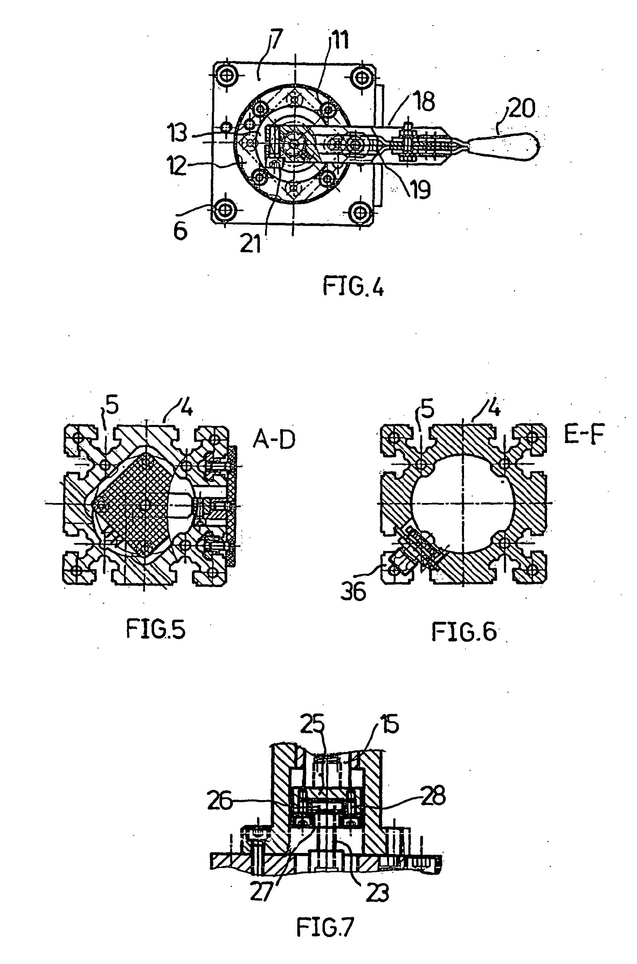

Das obere Ende der Spindel 23 ist bei 24 an das untere Ende des Doms 15 gekoppelt. Wie Fig. 7 zeigt weist die Kopplung eine mit dem Dorn 15 verbundene Kopplungsplatte 25 mit einer Einsenkung auf, in welche ein mit der Spindel 23 verbundenes Kopfstück 26 eingreift. Das Kopfstück 26 hintergreift eine Platte 27, die durch Schrauben 28 mit der Kopplungsplatte 25 verbunden ist und einen Durchgang für die Spindel 23 aufweist.

An ihrem unteren Ende ist die Spindel 23 mit einer Schaltfahne 29 verbunden, welche einen induktiven Endschalter 30 betätigt. Den Endschalter 30 trägt eine Platte 34, welche eine Öffnung 35 im Hohlprofil 4 abdeckt.

Eine Schraubenfeder 31 innerhalb des Doms 15 liegt mit einem Ende gegen einen Querbolzen 32 an, welcher ein querverlaufendes Langloch 33 im Dorn 15 durchsetzt und mit seinen Enden in Bohrungen in der Führungshülse 13 eingreift.

Das Bezugszeichen 36 weist auf eine Kabeldurchführung hin, durch welche hindurch Anschlussleitungen für den Schrittmotor 9 und den Endschalter 30 verlegbar sind.

Die Schrittmotoren 9 und die Endschalter 30 der Halteelemente 2 der in Fig. 1 gezeigten Vorrichtung stehen über Leitungen 36 bzw. 41 in Verbindung mit einer Steuereinheit 38, welche über eine Leitungsverbindung 39 an einen Computer 40 angeschlossen ist. Zwischen dem Computer 40 und einer nicht gezeigten Messmaschine besteht eine Leitungsverbindung 42.

In dem gezeigten Ausführungsbeispiel bewirkt der Schrittmotor 9 vertikale Verschiebungen des Haltepunktes am Kugelkopf 16 um jeweils 0,01 mm. Der durch den Endschalter 30 begrenzte Gesamthub des Haltepunktes beträgt 10 mm.

Die Lage der Haltepunkte der einzelnen Halteelemente 2 der Vorrichtung von Fig. 1 lässt sich vom Computer 40 aus in Schritten von 0,01 mm verändern und an dessen Bildschirm anzeigen. Gewünschte Raumpositionen der Haltepunkte sind vorwählbar. Die Steuereinheit 38 erzeugt Spannungsimpulse zur Ansteuerung der Schrittmotoren 9 entsprechend den Eingaben in den Computer 40. Die jeweiligen im Computer 40 gespeicherten Raumpositionen der Haltepunkte stehen der Koordinatenmessmaschine über die Verbindung 42 als Bezugswerte zur Verfügung.

Indem das Karosseriebauteil 3 mit Hilfe der Spanneinrichtungen 17 gegen die Haltepunkte gedrückt werden kann, lässt sich das Werkstück im gehaltenen Zustand durch Verstellung der Haltepunkte elastisch verformen. Die anschließende Vermessung auf solche Weise elastisch verformter Bauteile kann Aufschluss darüber geben, wie sich Abweichungen des Bauteils von den vorgegebenen Maßen auswirken und in wie weit diese Abweichungen tolerierbar sind. Gegebenenfalls kann gestützt auf solche Messungen entschieden werden, ob ein Presswerkzeug mit hohem Aufwand geändert wird oder nicht.

## Patentansprüche

1. Verwendung einer Vorrichtung, die mehrere Halteelemente (2) umfasst, welche in verschiedenen räumlichen Positionen jeweils einen Haltepunkt für ein Werkstück (3), insbesondere ein Bauteil einer Fahrzeugkarosserie, bilden, wobei die Position des Haltepunktes wenigstens eines der Halteelemente (2) durch einen Motor (9) verstellbar ist, **dadurch gekennzeichnet, dass** eine das Werkstück (3) gegen den Haltepunkt drückende Spanneinrichtung (17) vorgesehen ist zum elastischen Verformen des Werkstücks (3) durch motorische Verstellung des Haltepunkts und zum Halten des elastisch verformten Werkstücks (3) in einer Referenzlage.

2. Verwendung nach Anspruch 1,
**dadurch gekennzeichnet,**
**dass** das Ausmaß der motorischen Verstellung durch eine Messeinrichtung (30) erfasst wird.

3. Verwendung nach Anspruch 1 oder 2,
**dadurch gekennzeichnet,**
**dass** das Ausmaß der Verstellung vorgewählt werden kann.

4. Verwendung nach einem der Ansprüche 1 bis 3,
**dadurch gekennzeichnet,**
**dass** als Motor ein Schrittmotor (9) eingesetzt wird.

5. Verwendung nach einem der Ansprüche 1 bis 4,
**dadurch gekennzeichnet,**
**dass** zur Bildung des Haltepunkts ein Kopf (16) mit einer Kegelfläche verwendet wird.

6. Verwendung nach einem der Ansprüche 1 bis 5,
**dadurch gekennzeichnet,**
**dass** ein Motor (9) mit einer auf einer Spindel (23) sitzenden Hohlwelle (22), welche die Spindel in Richtung der Spindelachse translatorisch verschiebt, eingesetzt wird.

7. Verwendung nach Anspruch 5 oder 6,
**dadurch gekennzeichnet,**
**dass** der die Kugelfläche aufweisende Kopf (16) an einem durch den Motor (9) in einer Führung (13,14) verschiebbaren Dorn (15) angebracht wird.

8. Verwendung nach Anspruch 7,
**dadurch gekennzeichnet,**
**dass** der Dorn (15) an die Spindel (23) gekoppelt wird.

9. Verwendung nach Anspruch 7 oder 8,
**dadurch gekennzeichnet,**
**dass** für die Spanneinrichtung (17) ein mit dem Dorn (15) verbundener, den Rand des Werkstücks (3) übergreifender Bügel (18,19) mit einem gegen das Werkstück (3) drückbaren Bügelschenkel (19)verwendet wird.

10. Verwendung nach einem der Ansprüche 1 bis 9,
**dadurch gekennzeichnet,**
**dass** ein Computer verwendet wird, welcher die geänderte Haltepunktposition, gegebenenfalls anhand der Schrittzahl des Schrittmotors(9), ermittelt und speichert.

## Claims

1. Use of an apparatus which comprises a plurality of holding elements (2) which, in various spatial positions, each form a holding point for a workpiece (3), in particular a component of a vehicle body, wherein the position of the holding point of at least one of the holding elements (2) can be adjusted by means of a motor (9), **characterized in that** a clamping device (17) which presses the workpiece (3) against the holding point is provided for the elastic deformation of the workpiece (3) by means of motorized adjustment of the holding point and for holding the elastically deformed workpiece (3) in a reference position.

2. Use according to Claim 1, **characterized in that** the extent of the motorized adjustment is detected by means of a measuring device (30).

3. Use according to Claim 1 or 2, **characterized in that** the extent of the adjustment can be preselected.

4. Use according to one of Claims 1 to 3, **characterized in that** a stepping motor (9) is used as the motor.

5. Use according to one of Claims 1 to 4, **characterized in that** a head (16) with a spherical surface is used to form the holding point.

6. Use according to one of Claims 1 to 5, **characterized in that** use is made of a motor (9) with a hollow shaft (22) which sits on a spindle (23) and displaces the spindle in a translatory manner in the direction of the spindle axis.

7. Use according to Claim 5 or 6, **characterized in that** the head (16) having the spherical surface is fitted on a spike (15) which can be displaced in a guide (13, 14) by means of the motor (9).

8. Use according to Claim 7, **characterized in that** the spike (15) is coupled to the spindle (23).

9. Use according to Claim 7 or 8, **characterized in that** for the clamping device (17) use is made of a clamp (18, 19) which is connected to the spike (15), engages over the edge of the workpiece (3) and has a clamp limb (19) which can be pressed against the workpiece (3).

10. Use according to one of Claims 1 to 9, **characterized in that** use is made of a computer which determines and stores the changed holding point position, if appropriate with reference to the number of steps taken by the stepping motor (9).

## Revendications

1. Utilisation d'un dispositif qui comprend plusieurs éléments support (2), qui forment, dans différentes positions spatiales, à chaque fois un point d'arrêt pour une pièce (3), en particulier une pièce d'une carrosserie de voiture, la position du point d'arrêt d'au moins un des éléments support (2) étant réglable par un moteur (9), **caractérisé**
**en ce qu'**on a prévu un dispositif de serrage (17) poussant la pièce (3) contre le point d'arrêt pour la déformation élastique de la pièce (3) par un réglage motorisé du point d'arrêt et pour tenir la pièce (3) élastiquement déformée dans une position de référence.

2. Utilisation selon la revendication 1, **caractérisée**
**en ce que** l'ampleur du réglage motorisé est saisie par un dispositif de mesure (30).

3. Utilisation selon la revendication 1 ou 2, **caractérisée**
**en ce que** l'ampleur du réglage peut être choisie au préalable.

4. Utilisation selon l'une quelconque des revendications précédentes 1 à 3, **caractérisée**
**en ce qu'**on utilise un moteur pas à pas (9) comme moteur.

5. Utilisation selon l'une quelconque des revendications précédentes 1 à 4, **caractérisée**
**en ce qu'**on utilise une tête (16) avec une surface sphérique pour la formation du point d'arrêt.

6. Utilisation selon l'une quelconque des revendications précédentes 1 à 5, **caractérisée**
**en ce qu'**on utilise un moteur (9) avec un arbre creux (22) placé sur une broche (23), ledit arbre creux déplaçant par translation la broche dans le sens de la broche.

7. Utilisation selon la revendication 5 ou 6, **caractérisée**
**en ce que** la tête (16) présentant la surface sphérique est disposée sur un mandrin (15) pouvant être déplacé par le moteur (9) dans un dispositif de guidage (13, 14).

8. Utilisation selon la revendication 7, **caractérisée**
**en ce que** le mandrin (15) est couplé à la broche (23).

9. Utilisation selon la revendication 7 ou 8, **caractérisée**
**en ce qu'**on utilise, pour le dispositif de serrage (17) un étrier (18, 19) raccordé au mandrin (15), s'agrippant au bord de la pièce (3), avec une branche d'étrier (19) pouvant être poussée contre la pièce (3).

10. Utilisation selon l'une quelconque des revendications précédentes 1 à 9, **caractérisée**
**en ce qu'**on utilise un ordinateur, qui détermine et enregistre la position modifiée du point d'arrêt, le cas échéant à l'aide du nombre de pas du moteur pas à pas (9).
